# EUROPEAN PATENT SPECIFICATION

(11) **EP 4 036 186 B1**
(45) Date of publication and mention of the grant of the patent: **28.10.2026**
(21) Application number: 20867708.8
(22) Date of filing: 10.09.2020
(51) Int. Cl.: C09J 123/00, C09J 123/10, C09J 125/04, B32B 15/085, H01M 8/0284, B32B 7/12, B32B 15/18, B32B 15/20, B32B 27/30, B32B 27/32, C09J 151/06, H01M 8/0297

(54) **ADHESIVE COMPOSITION AND ADHESION METHOD**
HAFTZUSAMMENSETZUNG UND HAFTVERFAHREN
COMPOSITION ADHÉSIVE ET PROCÉDÉ DE COLLAGE

(30) Priority: 26.09.2019 JP 2019176237
(43) Date of publication of application: 03.08.2022
(73) Proprietor: Toagosei Co., Ltd., Minato-ku Tokyo 105-8419 (JP); TOYOBO CO., LTD., Osaka-shi, Osaka 530-0001 (JP)
(72) Inventor: SUGIKI,Tomoya, Tokyo 105-8419 (JP); ITO,Takahiro, Nagoya-shi, Aichi 455-0026 (JP); IMAHORI,Makoto, Nagoya-shi, Aichi 455-0026 (JP); WATANABE,Shinya, Tsuruga-shi, Fukui 914-8550 (JP); KOGANEMARU,Ai, Otsu-shi, Shiga 520-0292 (JP); OKUMURA,Hisao, Tokyo 104-8345 (JP)
(74) Representative: Vossius & Partner Patentanwälte Rechtsanwälte mbB
(86) International application number: PCT/JP2020/034311
(87) International publication number: WO 2021/059996

(56) References cited:
- EP-A1- 3 369 795
- EP-A1- 3 593 993
- EP-A1- 3 878 918
- WO-A1-2012/090646
- WO-A1-2018/180025
- JP-A- 2004 339 384
- JP-A- 2005 114 048
- JP-A- 2011 143 577
- JP-A- 2011 256 339
- JP-A- 2013 091 702
- JP-A- 2018 138 639
- JP-A- 2019 112 611
- US-A1- 2013 096 247

## Description

### TECHNICAL FIELD

The present disclosure relates to an adhesive composition and an adhesion method which are used for bonding a metal member having a ratio of a dipole term in surface free energy of 0.01% to 5.0%, and are suitable for use in various fields such as an electric field, an automobile field, and other industrial fields, particularly in the field of an on-vehicle battery such as a fuel cell.

### BACKGROUND ART

A hot-melt type adhesive composition is processed into a film shape or a sheet shape, and the processed product is used as an adhesive film or sheet laminated on the surface of a member in various fields such as an electric field, an automobile field, and other industrial fields.

In order to bond a metal member made of iron, aluminum, titanium, other metals, and alloys thereof and the like, which are used in these fields, the use of a hot-melt type composition containing an olefinic thermoplastic resin modified with an acid (hereinafter, referred to as "acid-modified polyolefin") as a main component has been known to provide an assembly having relatively good adhesive strength.

However, when the assembly is used in the presence of water, the assembly has a problem that peeling is promoted by the infiltration of the water into an adhesion interface, which causes a decreased adhesive force in a short time.

For this reason, a specific adhesive composition and a method for producing an assembly have been proposed.

Patent Document 1 discloses an adhesive seal member using an adhesive composition containing a specific acid-modified polyolefin, a thermoplastic elastomer not modified with an acid, and a silane coupling agent having an epoxy group. This has an adhesive force provided by a chemical bond between the silane coupling agent and a hydroxyl group on a metal surface, and an assembly using the seal member has excellent water resistance.

Patent Document 2 relates to a method for producing an assembly of a metal member and a thermoplastic resin member by thermal welding using a polyolefin under a specific condition, and discloses that the film thickness of the polyolefin is 0.1 to 9 mm when the metal member is subjected to a surface treatment such as a chromate treatment, and the film thickness of the polyolefin is 0.2 to 9 mm when the metal member is not subjected to the surface treatment.
Patent Document 3 concerns an adhesive composition comprising an acid-modified polyolefin (A), a curing agent (B), and an organic solvent (C), wherein the total amount of the acid-modified polyolefin (A), the curing agent (B), and deposits of reaction products thereof remaining after a redissolution test is 200 g/m² or less.

### PRIOR ART DOCUMENTS

### PATENT DOCUMENTS

Patent Document 1: JP-A-2011-213767
Patent Document 2: International Publication No. 2014/112506
Patent Document 3: JP-A-2019-112611

### SUMMARY OF THE INVENTION

### PROBLEMS TO BE SOLVED BY THE INVENTION

However, the assembly including the adhesive seal member described in Patent Document 1 has a problem that the assembly has relatively good water resistance, but has a significantly decreased adhesive force in the presence of hot water.

In the method for producing an assembly described in Patent Document 2, the low-polarity metal member having a ratio of a dipole term in surface free energy of 5.0% or less disadvantageously has poor water resistance, and particularly a significantly decreased adhesive force in the presence of hot water when the film thickness of the polyolefin is made thinner than 200 µm regardless of the presence or absence of a surface treatment.

The present disclosure has been made in view of the above circumstances, and an object of the present disclosure is to provide an adhesive composition having an excellent adhesive force (hereinafter, referred to as "excellent hot water resistance") in the presence of hot water in an assembly in which at least one of two or more members to be bonded to each other via the adhesive composition is a low-polarity metal member.

An object of another embodiment of the present disclosure is to provide an adhesion method having excellent hot water resistance.

### MEANS FOR SOLVING THE PROBLEMS

As a result of intensive studies to solve the above problems, the present inventors have found an adhesive composition having excellent hot water resistance in an assembly in which at least one of two or more members to be bonded to each other via the adhesive composition is a low-polarity metal member.

The present invention is as set out in the claims.

### EFFECT OF THE INVENTION

An adhesive composition of the present disclosure can provide an assembly including a low-polarity metal member as at least one member and having excellent hot water resistance.

An adhesion method of the present disclosure can provide an adhesion method having excellent hot water resistance.

### MODE FOR CARRYING OUT THE INVENTION

In the present disclosure, a numerical range represented by "to" means a range including numerical values described before and after "to" as a lower limit value and an upper limit value. In numerical ranges described stepwise in the present disclosure, an upper limit value or a lower limit value described in a certain numerical range may be replaced with an upper limit value or a lower limit value of another stepwise described numerical range. In the numerical range described in the present disclosure, the upper limit value or the lower limit value described in a certain numerical range may be replaced with a value shown in Examples.

In the present disclosure, "% by mass" and "% by weight" are synonymous, and "parts by mass" and "parts by weight" are synonymous.

In the present disclosure, combination of two or more preferred aspects is a more preferred aspect.

The present disclosure relates to an adhesive composition for bonding a metal member, the adhesive composition containing a polyolefin (A) component (hereinafter, simply referred to as "component (A)") having at least one group selected from the group consisting of an acidic group and an acid anhydride group and having an acid value of 0.01 mgKOH/g to 6.5 mgKOH/g, the metal member having a ratio of a dipole term in surface free energy of 0.01% to 5.0%, and the adhesive composition further contains a styrene-based thermoplastic elastomer (B) component.

Hereinafter, the component (A), other components, the adhesive composition, the metal member, a method for producing the adhesive composition, an assembly, an adhesion method, and uses will be described.

### 1.Component (A)

The component (A) is a polyolefin having at least one group selected from the group consisting of an acidic group and an acid anhydride group. Examples of a method for introducing at least one group selected from the group consisting of an acidic group and an acid anhydride group include modification with an acidic group-containing monomer and/or an acid anhydride group-containing monomer to be described later.

Specific examples of the acidic group include a carboxylic acid group, a sulfonic acid group, and a phosphoric acid group. Among these, a carboxylic acid group is preferable from the viewpoint of easy modification.

Specific examples of the acid anhydride group include a carboxylic acid anhydride group, a sulfonic acid anhydride group, and a phosphoric acid anhydride group. Among these, a carboxylic acid anhydride group is preferable from the viewpoint of easy availability of raw materials and easy modification.

Among the above, from the viewpoint of hot water resistance, in the component (A), it is preferable that the acidic group contains a carboxylic acid group, and the acid anhydride group contains a carboxylic acid anhydride group.

As a method for the modification, a known method can be employed. Examples of the method include graft modification such as melt-kneading an acidic group-containing monomer and/or an acid anhydride group-containing monomer with a polyolefin in the presence of a radical polymerization initiator such as an organic peroxide or an aliphatic azo compound, and copolymerizing an acidic group-containing monomer and/or an acid anhydride group-containing monomer with an olefin.

### 1-1 Acidic group-containing monomer

Examples of a raw material of the component (A) include an acidic group-containing monomer. Specifically, the acidic group-containing monomer is a compound having an ethylenic double bond and a carboxylic acid group and the like in the same molecule, and examples thereof include various unsaturated monocarboxylic acid compounds and unsaturated dicarboxylic acid compounds.

Specific examples of the unsaturated monocarboxylic acid compound include acrylic acid, methacrylic acid, crotonic acid, and isocrotonic acid.

Specific examples of the unsaturated dicarboxylic acid compound include maleic acid, itaconic acid, citraconic acid, nadic acid, and endic acid.

The acidic group-containing monomer is preferably an unsaturated dicarboxylic acid compound, and particularly preferably maleic acid, from the viewpoint of easy modification.

Only one of these acidic group-containing monomers may be used, or two or more thereof may be used in combination.

When a part of the acidic group-containing monomer used for modification remains unreacted, it is preferable to use the component (A) from which the unreacted acidic group-containing monomer has been removed by a known method, in order to suppress an adverse effect on an adhesive force.

### 1-2. Acid anhydride group-containing monomer

Examples of a raw material of the component (A) include an acid anhydride group-containing monomer. Specifically, the acid anhydride group-containing monomer is a compound having an ethylenic double bond and a carboxylic acid anhydride group and the like in the same molecule, and examples thereof include an acid anhydride of the unsaturated monocarboxylic acid compound, and an acid anhydride of the unsaturated dicarboxylic acid compound.

Specific examples of the acid anhydride of the unsaturated monocarboxylic acid compound include acrylic anhydride, methacrylic anhydride, crotonic anhydride, and isocrotonic anhydride.

Specific examples of the acid anhydride of the unsaturated dicarboxylic acid compound include maleic anhydride, itaconic anhydride, citraconic anhydride, nadic anhydride, and endic anhydride.

The acid anhydride group-containing monomer is preferably an acid anhydride of an unsaturated dicarboxylic acid compound, and particularly preferably maleic anhydride, from the viewpoint of easy modification.

Only one of these acid anhydride group-containing monomers may be used, or two or more thereof may be used in combination.

When a part of the acid anhydride group-containing monomer used for modification remains unreacted, it is preferable to use the component (A) from which the unreacted acid anhydride group-containing monomer has been removed by a known method, in order to suppress an adverse effect on an adhesive force.

### 1-3. Polyolefin

Examples of a raw material of the component (A) include a polyolefin having no acidic group and no acid anhydride group (hereinafter, referred to as "component (a1)").

Specific examples of the component (a1) include polyethylene, polypropylene, a random copolymer of propylene and ethylene, a block copolymer of propylene and ethylene, a random copolymer of ethylene and an α-olefin, a block copolymer of ethylene and an α-olefin, a random copolymer of propylene and an α-olefin, and a block copolymer of propylene and an α-olefin. Examples of the α-olefin include 1-butene, isobutylene, 1-hexene, and 1-octene.

Among these, polypropylene-based polymers such as polypropylene, a propylene-ethylene block copolymer, a propylene-ethylene random copolymer, a propylene-α-olefin random copolymer, and a propylene-α-olefin block copolymer are preferable from the viewpoint of being able to improve hot water resistance. Furthermore, it is particularly preferable that the propylene unit constitutes 50% by mass or more of the component (a1).

Only one of the components (a1) may be used, or two or more thereof may be used in combination.

The acid value of the component (A) is 0.01 mgKOH/g to 6.5 mgKOH/g. From the viewpoint of being able to impart the adhesive force to the metal member, the acid value is 0.01 mgKOH/g or more, more preferably 0.1 mgKOH/g or more, and particularly preferably 0.5 mgKOH/g or more. From the viewpoint of being able to improve the hot water resistance, the acid value is 6.5 mgKOH/g or less, more preferably 3.0 mgKOH/g or less, still more preferably 2.0 mgKOH/g or less, and particularly preferably 1.0 mgKOH/g or less.

The acid value can be measured in accordance with JIS K 0070: 1992. Specifically, a precisely weighed sample is dissolved in a mixed solvent having a mass ratio of mixed xylene : n-butanol = 1 : 1 to obtain a sample solution. Next, to this sample solution, a few drops of 1 w/v % phenolphthalein solution in ethanol are added as an indicator. Using a 0.1 mol/L potassium hydroxide solution in ethyl alcohol as a titrant, titration is carried out. The acid value is calculated according to the following formula. In the following formula, T represents a titration amount (mL); F represents a factor of a titrant; and W represents a sampled amount (g). $Acid value = \left(T\times F\times 56.11\times 0.1\right) / W$

The component (A) preferably contains a propylene unit. The content of the propylene unit in the component (A) is preferably 50% by mass or more, more preferably 80% by mass or more, and still more preferably 90% by mass or more, with respect to the component (A), from the viewpoint of being able to improve hot water resistance.

The melting point of the component (A) is preferably 100°C to 200°C, and more preferably 120°C to 180°C. The melting point is preferably 100°C or higher from the viewpoint of being able to improve hot water resistance, and is preferably 200°C or lower from the viewpoint of being able to improve processability.

The melting point can be obtained as a melting peak temperature when measurement is performed at a temperature rising rate of 10°C/min from 25°C to 230°C in a state where about 20 mg of a sample is sealed in an aluminum pan for measurement using a differential scanning calorimeter (DSC) (for example, DSCQ 100 manufactured by TA Instruments).

The melt flow rate (hereinafter, referred to as "MFR") of the component (A) is preferably 0.1 g/10 min to 30 g/10 min, and more preferably 0.1 g/10 min to 20 g/10 min under measurement conditions of 230°C and a test pressure of 1.96 MPa. The melt flow rate is preferably 0.1 g/10 min or more from the viewpoint of being able to improve processability, and is preferably 30 g/10 min or less from the viewpoint of being able to improve hot water resistance.

The MFR can be measured under the following conditions in accordance with JIS K 7210: 2014.
- Device: Flow tester CFT-500 (manufactured by Shimadzu Corporation)
- Dies: Φ 1 mm × 10 mm
- Test pressure: 1.96 MPa
- Cylinder area: 1 cm²
- Cylinder temperature: 230°C

In the adhesive composition of the present disclosure, only one of the components (A) may be used alone, or two or more thereof may be used in combination.

In the adhesive composition of the present disclosure, the content of the component (A) is preferably 80% by mass to 100% by mass, and more preferably 90% by mass to 100% by mass, based on 100% by mass of the adhesive composition because of excellent hot water resistance, provided that the adhesive composition also contains the styrene-based thermoplastic elastomer (B) component.

### 2. Other components

The adhesive composition of the present disclosure contains the component (A) and the styrene-based thermoplastic elastomer (B) component, but may be supplemented with various components depending on purposes. The adhesive composition of the present disclosure preferably contains no polyfunctional isocyanate compound, and preferably contains, for example, 100 ppm or less of the polyfunctional isocyanate compound, because hot water resistance may be deteriorated.

Specific examples of the other components other than the styrene-based thermoplastic elastomer (hereinafter, referred to as "component (B)"), include a tackifier, an antioxidant, a hindered amine-based light stabilizer, an ultraviolet absorber, an anti-static agent, a flame retardant, a coloring agent, a dispersant, an adhesiveness imparting agent, a defoaming agent, a leveling agent, a plasticizer, a lubricant, and a filler. The adhesive composition of the present invention contains a styrene-based thermoplastic elastomer (B) component. The adhesive composition of the present disclosure may contain a polyolefin (for example, the component (a1) and the like) other than the component (A).

Hereinafter, these components will be described.

As the other components described below, only one of the exemplified compounds may be used, or two or more thereof may be used in combination.

### 2-1. Component (B)

The component (B) is a styrene-based thermoplastic elastomer, and is required in the adhesive composition for bonding a metal member of the present invention. It may improve an adhesive force.

Specific examples of the component (B) include styrene-based resins such as a styrene-butadiene copolymer, an epoxy-modified styrene-butadiene copolymer, a styrene-butadiene-styrene block copolymer, a styrene-ethylene/propylene-styrene block copolymer (hereinafter, referred to as "SEPS"), a styrene-ethylene/butylene-styrene block copolymer (hereinafter, referred to as "SEBS"), a styrene-isoprene/butadiene-styrene block copolymer, and a styrene-isoprene-styrene block copolymer. The component (B) may be one having no acidic group and no acid anhydride group, may be one having an acidic group and/or an acid anhydride group, or may be one having an amino group.

As a modification method for introducing an acidic group and/or an acid anhydride group, a known method may be employed. Examples thereof include graft modification such as melt-kneading the acidic group- and/or acid anhydride group-containing monomer with the styrene-based resin in the presence of a radical polymerization initiator such as an organic peroxide or an aliphatic azo compound.

As a modification method for introducing an amino group, a known method may be employed. Examples thereof include terminal modification such as adding an amino group-containing compound to a living terminal of the styrene-based resin obtained by living anionic polymerization, and graft modification such as melt-kneading an amine compound having an unsaturated bond such as 2- (1-cyclohexenyl) ethylamine with the styrene-based resin in the presence of a radical polymerization initiator such as an organic peroxide or an aliphatic azo

### compound.

The component (B) is preferably SEPS and SEBS from the viewpoint of being able to achieve both hot water resistance and processability.

The acid value of the component (B) is preferably 80 mgKOH/g or less from the viewpoint of being able to maintain stable quality. Furthermore, from the viewpoint of being able to improve hot water resistance, the acid value is more preferably 50 mgKOH/g or less, and particularly preferably 20 mgKOH/g or less, and may be 0.0 mgKOH/g. The acid value can be measured in accordance with JIS K 0070: 1992. Specifically, a precisely weighed sample is dissolved in a mixed solvent having a mass ratio of mixed xylene : n-butanol = 1 : 1 to obtain a sample solution. Next, to this sample solution, a few drops of 1 w/v % phenolphthalein solution in ethanol are added as an indicator. Using a 0.1 mol/L potassium hydroxide solution in ethyl alcohol as a titrant, titration is carried out. The acid value is calculated according to the following formula. In the following formula, T represents a titration amount (mL); F represents a factor of a titrant; and W represents a sampled amount (g). $Acid value = \left(T\times F\times 56.11\times 0.1\right) / W$

The MFR of the component (B) is preferably 1 g/10 min to 100 g/10 min, and more preferably 1 g/10 min to 90 g/10 min under measurement conditions of 230°C and a test pressure of 1.96 MPa. The MFR is preferably 1 g/10 min or more from the viewpoint of being able to improve processability, and is preferably 100 g/10 min or less from the viewpoint of being able to improve hot water resistance.

The MFR can be measured under the following conditions in accordance with JIS K 7210: 2014.
- Device: Flow tester CFT-500 (manufactured by Shimadzu Corporation)
- Dies: Φ 1 mm × 10 mm
- Test pressure: 1.96 MPa
- Cylinder area: 1 cm²
- Cylinder temperature: 230°C

In the adhesive composition of the present disclosure, it is preferable that the content ratio of the component (A) is 80% by mass or more and less than 100% by mass, and the content ratio of the component (B) is more than 0% by mass and 20% by mass or less, based on the total amount of the component (A) and the component (B), and it is more preferable that the content ratio of the component (A) is 80% by mass or more and 99% by mass or less, and the content ratio of the component (B) is 1% by mass or more and 20% by mass or less. The lower limit value of the content ratio of the component (B) is not limited, and is appropriately set within a range exceeding 0% by mass based on the total amount of the component (A) and the component (B).

The content ratio of the component (B) is preferably 1% by mass or more from the viewpoint of excellent processability and an excellent adhesive force, and is preferably 20% by mass or less from the viewpoint of being able to improve hot water resistance.

### 2-2. Tackifier

The tackifier may be blended for the purpose of improving the adhesive force.

As the tackifier, a known tackifier may be used. Examples thereof include a terpene-based resin, a rosin-based resin, an aliphatic petroleum resin, an alicyclic petroleum resin, a copolymeric petroleum resin, and a hydrogenated petroleum resin.

Specific examples of the terpene-based resin include an α-pinene polymer, a β-pinene polymer, and copolymers of these with phenol or bisphenol A or the like.

Specific examples of the rosin-based resin include a natural rosin, a polymerized rosin, and ester derivatives thereof.

The aliphatic petroleum resin is also referred to as a C5 resin, and is generally a resin synthesized from a C5 fraction of petroleum. The alicyclic petroleum resin is also referred to as a C9 resin, and is generally a resin synthesized from a C9 fraction of petroleum.

Specific examples of the copolymerized petroleum resin include a C5/C9 copolymerized resin.

The hydrogenated petroleum resin is generally produced by the hydrogenation of the various petroleum resins.

The content of the tackifier is preferably 1% by mass to 20% by mass, and more preferably 1% by mass to 10% by mass, with respect to 100% by mass of the adhesive composition, from the viewpoint of excellent hot water resistance.

### 3. Adhesive composition

The adhesive composition of the present disclosure contains at least the component (A) and the component (B).

The acid value of the adhesive composition of the present disclosure is preferably 0.01 mgKOH/g to 6.5 mgKOH/g. From the viewpoint of being able to impart the adhesive force to the metal member, the acid value is preferably 0.01 mgKOH/g or more, more preferably 0.1 mgKOH/g or more, and particularly preferably 0.5 mgKOH/g or more. From the viewpoint of being able to improve the hot water resistance, the acid value is preferably 6.5 mgKOH/g or less, more preferably 3.0 mgKOH/g or less, particularly preferably 2.0 mgKOH/g or less. Examples of a method in which the acid value of the adhesive composition of the present disclosure is adjusted include a method in which the content ratio of the component (A) in the adhesive composition is adjusted, and a method in which a polyolefin having an acid value of 0.05 mgKOH/g to 100 mgKOH/g and a component (a1) are blended.

The acid value can be measured in accordance with JIS K 0070: 1992. Specifically, a precisely weighed sample is dissolved in a mixed solvent having a mass ratio of mixed xylene : n-butanol = 1 : 1 to obtain a sample solution. Next, to this sample solution, a few drops of 1 w/v % phenolphthalein solution in ethanol are added as an indicator. Using a 0.1 mol/L potassium hydroxide solution in ethyl alcohol as a titrant, titration is carried out. The acid value is calculated according to the following formula. In the following formula, T represents a titration amount (mL); F represents a factor of a titrant; and W represents a sampled amount (g). $Acid value = \left(T\times F\times 56.11\times 0.1\right) / W$

The melting point of the adhesive composition of the present disclosure is preferably 100°C to 200°C, and more preferably 120°C to 180°C. The melting point is preferably 100°C or higher from the viewpoint of being able to improve hot water resistance, and is preferably 200°C or lower from the viewpoint of being able to improve processability.

The melting point can be obtained as a melting peak temperature when measurement is performed at a temperature rising rate of 10°C/min from 25°C to 230°C in a state where about 20 mg of a sample is sealed in an aluminum pan for measurement using a differential scanning calorimeter (DSC) (for example, DSCQ 100 manufactured by TA Instruments).

The MFR of the adhesive composition of the present disclosure is preferably 1 g/10 min to 30 g/10 min, and more preferably 5 g/10 min to 20 g/10 min under measurement conditions of 230°C and a test pressure of 1.96 MPa. The melt flow rate is preferably 1 g/10 min or more from the viewpoint of being able to improve processability, and is preferably 30 g/10 min or less from the viewpoint of being able to improve hot water resistance.

The MFR can be measured under the following conditions in accordance with JIS K 7210: 2014.
- Device: Flow tester CFT-500 (manufactured by Shimadzu Corporation)
- Dies: Φ 1 mm × 10 mm
- Test pressure: 1.96 MPa
- Cylinder area: 1 cm²
- Cylinder temperature: 230°C

### 4. Metal member

The metal member includes iron, aluminum, titanium, magnesium, copper, nickel, chromium, and other metals, and alloys thereof having the ratio of a dipole term in surface free energy of 0.01% to 5.0%.

The ratio of the dipole term in the surface free energy of the metal member is 0.01% to 5.0%, which can improve the hot water resistance. From the viewpoint of excellent hot water resistance, the ratio of the dipole term in the surface free energy is preferably 0.01% to 2.5%, more preferably 0.01% to 1.5%, and particularly preferably 0.01% to 1.0%.

Here, the surface free energy of the metal member, and the dispersion term, dipole term, and hydrogen bond term thereof are represented by the following abbreviations. These are calculated using the extended Fowkes formula based on a contact angle measured by a method to be described later, and the ratio of the dipole term in the surface free energy of the metal member is calculated by "γ_{M}^{P}/γ_{M} × 100".

γ_{M}: surface free energy of metal member (γ_{M}^{D} + γ_{M}^{P} + γ_{M}^{H})
γ_{M}^{D}: dispersion term of surface free energy of metal member
γ_{M}^{P}: dipole term of surface free energy of metal member
γ_{M}^{H}: hydrogen bond term of surface free energy of metal member

The γ_{M}, γ_{M}^{D}, γ_{M}^{P}, and γ_{M}^{H} are calculated by measuring a contact angle according to a three-point method under the following conditions by the sessile drop method using a contact angle meter defined in JIS R 3257: 1999 and using the extended Fowkes formula.
Measurement temperature: 25°C
Liquid: water, α-bromonaphthalene, diiodomethane

As the material of the metal member, titanium or a titanium alloy is preferable from the viewpoint of excellent acid resistance.

The thickness of the metal member may be appropriately set according to the material and application thereof, and the like without particular limitation.

### 5. Method for producing adhesive composition

The adhesive composition of the present disclosure can be produced by a known method.

Specifically, the adhesive composition is preferably obtained by mixing the component (A) and, as necessary, other components using a Henschel mixer, a Banbury mixer, a V-type blender, a tumbler blender, or a ribbon blender or the like, and can be obtained in the form of pellets by melt-kneading the mixture at 180 to 300°C, and preferably 190 to 260°C using a single-screw extruder, a multi-screw extruder, a roll, or a kneader or the like.

### 6. Assembly

The assembly of the present disclosure includes the metal member as a member, and has a configuration in which the metal member is incorporated via the adhesive composition of the present disclosure. At least one of two or more members is the metal member.

As the type of members, at least one of the two or more members is the metal member, but the other members may be the metal member, glass, and a thermoplastic resin and the like.

The shape of the member may be appropriately set according to the application and the like without particular limitation, but examples thereof include a film shape, a sheet shape, a plate shape, an angle shape, and a rod shape.

The adhesive composition of the present disclosure can be used in the form of pellets, and the pellets can be used as the shape (hereinafter, referred to as "adhesive film") of a film or a sheet or the like using a film molding machine. An adhesive film may be used, in which the resin composition is melt-kneaded at a temperature of 50°C to 200°C by a T-die type, inflation type, calendar type, or screw type extruder, and an adhesive resin layer composed of an adhesive composition is laminated on one surface or both surfaces of a metal, glass, or thermoplastic resin member by extrusion molding.

Examples of the glass include alkali glass, alkali-free glass, and quartz glass and the like.

Examples of the thermoplastic resin include a polyolefin-based resin, a polyester-based resin, a polyamide-based resin, a polyacrylonitrile-based resin, a polyvinyl alcohol-based resin, and a polyvinyl chloride-based resin.

When the thermoplastic resin member is used, an adhesive film including a thermoplastic resin layer is preferably obtained by subjecting the adhesive composition of the present disclosure to extrusion molding according to a co-extrusion method or an extrusion lamination method.

The assembly can be obtained by laminating the adhesive film including the metal member on the metal member, the glass, or the thermoplastic resin, followed by bonding under heating, and preferably heating and pressurizing.

Also, the assembly can be obtained by laminating the adhesive film including the thermoplastic resin on the metal member, followed by bonding under heating, and preferably heating and pressurizing.

The thickness of the adhesive resin layer may be appropriately set according to the material and application and the like of the metal member without particular limitation, but is preferably 10 to 200 µm, and more preferably 20 to 200 µm.

Here, the surface free energy of the adhesive composition, and the dispersion term, dipole term, and hydrogen bond term thereof are represented by the following abbreviations.

γ_{A}: surface free energy (γ_{A}^{D} + γ_{A}^{P} + γ_{A}^{H}) of adhesive composition
γ_{A}^{D}: dispersion term of surface free energy of adhesive composition
γ_{A}^{P}: dipole term of surface free energy of adhesive composition
γ_{A}^{H}: hydrogen bond term of surface free energy of adhesive composition

The γ_{A}, γ_{A}^{D}, γ_{A}^{P}, and γ_{A}^{H} are calculated by measuring a contact angle according to a three-point method under the following conditions by the sessile drop method using a contact angle meter defined in JIS R 3257: 1999 and using the extended Fowkes formula.
Measurement temperature: 25°C
Liquid: water, α-bromonaphthalene, diiodomethane

In the assembly of the present disclosure, the difference between the surface free energy of the metal member and the surface free energy of the adhesive composition is calculated by "γ_{M} - γ_{A}", and the difference between the surface free energy of the metal member and the surface free energy of the adhesive composition is preferably 5.0 mN/m or more for the reason that the hot water resistance of the assembly is excellent because the wettability of the adhesive composition to the metal member is good. The difference between the surface free energy of the metal member and the surface free energy of the adhesive composition is preferably 30 mN/m or less, and more preferably 15 mN/m or less, from the viewpoint of being able to maintain stable quality.

### 7. Method for bonding

In the adhesion method of the present disclosure, by using an adhesive composition containing a polyolefin (A) component having at least one group selected from the group consisting of an acidic group and an acid anhydride group and having an acid value of 0.01 mgKOH/g to 6.5 mgKOH/g, and further containing a styrene-based thermoplastic elastomer (B) component, two or more members wherein at least one of the members is a metal member having a ratio of a dipole term in surface free energy of 0.01% to 5.0% are bonded.

The adhesive composition and the metal member in the adhesion method of the present disclosure are as described above.

Examples of a method in which two or more members are bonded in the adhesion method of the present disclosure include a method in which an adhesive resin layer made of an adhesive composition is formed on the surface of at least one member of two or more members, and the other member is laminated on the surface of the adhesive resin layer.

In the adhesion method of the present disclosure, furthermore, two or more members are preferably bonded by heating, and more preferably bonded by heating and pressurizing.

A temperature may be appropriately adjusted by the adhesive composition and the member, and is usually 120°C to 200°C.

A pressure may be appropriately adjusted by the adhesive composition and the member, and is usually 0.1 MPa to 5.0 MPa.

### 8. Application

The adhesive composition and the adhesion method of the present disclosure can be used in various fields such as an electric field, an automobile field, and other industrial fields, particularly in the field of an on-vehicle battery such as a fuel cell.

Examples of applications in the electric field include decoration by attaching decorative sheets, bonding between a metal member and a resin, and sealing of electronic components, in mobile devices, housings of television sets, and housings of household electrical appliances and the like.

Examples of applications in the automobile field include bonding of an exterior material formed of a metal member/resin in interior/exterior members such as a pillar, a mall, a door trim, a spoiler, and a roof, and bonding of a substrate with genuine leather, fabrics, an instrument panel foamed sheet, and a decorative sheet.

Examples of applications in the other industrial fields include bonding of films of an industrial packaging material and a multilayer film such as a barrier film.

Examples of applications in the other fields include bonding of logistics materials, housing and building materials, everyday goods, and sporting goods and the like.

### EXAMPLES

Hereinafter, the present disclosure will be more specifically described with reference to Examples and Comparative Examples.

### 1. Physical properties of resins used

The acid values and MFRs of the resins used are shown in the following Table 1.

### Measuring method of Acid value

An acid value indicates the number of milligrams of potassium hydroxide required to neutralize an acid contained in 1 g of a sample.

The acid value was measured in accordance with JIS K 0070: 1992.

Specifically, a precisely weighed sample is dissolved in a mixed solvent having a mass ratio of mixed xylene : n-butanol = 1 : 1 to obtain a sample solution. Next, to this sample solution, a few drops of 1 w/v % phenolphthalein solution in ethanol are added as an indicator. Using a 0.1 mol/L potassium hydroxide solution in ethyl alcohol as a titrant, titration is carried out. The acid value is calculated according to the following formula. $Acid value = \left(T\times F\times 56.11\times 0.1\right) / W$

Here, in the above calculation formula, T represents a titration amount (mL); F represents a factor of a titrant; and W represents a sampled amount (g).

### Measuring method of MFR

MFR was measured under the following conditions.
- Device: Flow tester CFT-500 (manufactured by Shimadzu Corporation)
- Dies: Φ 1 mm × 10 mm
- Test pressure: 1.96 MPa
- Cylinder area: 1 cm²
- Cylinder temperature: 230°C

**[Table 1]**

| | | Structure | Acid value 1) | MFR 2) |
|---|---|---|---|---|
| Component (A) | A1 | Polypropylene having acidic group and acid anhydride group (propylene unit: 94.93% by mass, olefin unit other than propylene: 5.00% by mass, maleic anhydride unit (containing partially hydrolyzed one): 0.07% by mass) | 0.76 | 8.2 |
| | A2 | Polypropylene having acidic group and acid anhydride group (propylene unit: 99.92% by mass, maleic anhydride unit (containing partially hydrolyzed one): 0.08% by mass) | 0.80 | 9.1 |
| Component (B) | B1 | Styrene-ethylene/propylene-styrene type block copolymer having no acidic group and no acid anhydride group (styrene unit: 30% by mass) | 0.0 | 70 |
| | B2 | Styrene-ethylene/butylene-styrene type block copolymer having acidic group and acid anhydride group (styrene unit: 20% by mass, maleic anhydride unit (containing partially hydrolyzed one): 1.03% by mass) | 10.0 | 8.0 |
| | B3 | Styrene-ethylene/butylene-styrene type block copolymer having amino group (styrene unit: 30% by mass) | 0.0 | 4.0 |
| PA | | Nylon-based copolymerized polyamide resin | 7.0 | 6.0 |
| PES | | Saturated copolymerized polyester resin | 0.8 | 60 |
| PP | | Polypropylene having acidic group and acid anhydride group (propylene unit: 80.85% by mass, olefin unit other than propylene: 14.55% by mass, maleic anhydride unit (containing partially hydrolyzed one): 4.6% by mass) | 10.3 | 22 |

| | | | | |
|---|---|---|---|---|
| 1) Acid value: mgKOH/g 2) MFR: g/10 min | | | | |

### 2. Surface free energy of metal members used

Table 2 below shows the material, surface free energy, a dispersion term, dipole term, and hydrogen bond term thereof, and the ratio of the dipole term to the surface free energy of each of five metal members (M1 to M5) used.

As the metal member, a plate having a size of 10 mm × 30 mm and a thickness of 100 µm was used.

**[Table 2]**

| Metal member | M1 | M2 | M3 | M4 | M5 |
|---|---|---|---|---|---|
| Material | Titanium | Titanium | Titanium | Titanium | Titanium |
| Surface free energy γ_{M} | 47.1 | 49.7 | 50.9 | 45.0 | 51.6 |
| Dispersion term γ_{M}^{D} | 45.0 | 43.0 | 43.0 | 45.0 | 47.8 |
| Dipole term γ_{M}^{P} | 0.4 | 3.2 | 5.6 | 0.0 | 2.5 |
| Hydrogen bond term γ_{M}^{H} | 1.7 | 3.5 | 2.3 | 0.0 | 1.1 |
| Ratio of dipole term: γ_{M}^{P}/γ_{M} × 100 (%) | 0.85 | 6.4 | 11.0 | 0.0 | 4.8 |

### 3. Examples 1 to 6 (Examples 1 and 2 are for reference), and Comparative Examples 1 to 8

### 1) Preparation of adhesive composition (hereinafter, may be simply referred to as "composition")

Compounds shown in the following Table 4 were mixed in advance in the amounts of parts by mass shown in Table 4, and the mixture was then charged into a twin-screw extruder with L/D = 42 and ϕ = 58 mm from a hopper thereof to melt-mix the composition. At this time, a barrel temperature was set to 170°C. Deaeration was performed, and the mixture was discharged in a strand shape. The discharged resin was cooled through a water tank, processed into pellets by a pelletizer, and dried in a constant temperature bath at 40°C to prepare a pelletized composition.

Using the obtained composition, the MFR thereof was measured in the same manner as the method described in the above "1. Physical Properties of Resins Used", and evaluated as described later. The results are shown in Table 4.

### 2) Production of adhesive film

Using a film molding machine, the pelletized composition obtained in the above 3.1) was formed into an adhesive film having a film thickness of 50 µm, and the adhesive film was cut to a size of 10 mm × 20 mm.

Here, γ_{A}, γ_{A}^{D}, γ_{A}^{P} and γ_{A}^{H} were calculated by measuring a contact angle according to a three-point method under the following conditions by the sessile drop method defined in JIS R 3257: 1999 and using the extended Fowkes formula. The results are shown in Table 4. A difference (γ_{M} - γ_{A}) in surface free energy between the metal member and the composition (film-shaped adhesive composition: adhesive film) is shown in Table 4. The γ_{L}, γ_{L}^{D}, γ_{L}^{P}, and γ_{L}^{H} of each liquid used in the sessile drop method are shown in Table 3 below.
Device: CA-X type contact angle meter (manufactured by Kyowa Interface Science Co., Ltd.)
Measurement temperature: 25°C
Liquid: water, α-bromonaphthalene, diiodomethane

**[Table 3]**

| Liquid | γ_{L} | γ_{L}^{D} | γ_{L}^{P} | γ_{L}^{H} |
|---|---|---|---|---|
| Water | 72.8 | 29.1 | 1.3 | 42.4 |
| α-bromonaphthalene | 44.6 | 44.4 | 0.2 | 0.0 |
| Diiodomethane | 50.8 | 46.8 | 4.0 | 0.0 |

### 3) Method for producing assembly

The adhesive film obtained in the above 3.2) was sandwiched between the same type of two metal members, and pressure-bonded by applying a pressure from both sides of the metal members using a press machine. This bonding condition included a temperature of 160°C, a pressure of 3.0 MPa, and a pressure bonding time of 10 seconds. Then, the integrated product was housed in an environment adjusted to 25°C for 3 days to obtain an assembly.

### 4) Evaluation of assembly

The assembly obtained in the above 3.3) was evaluated as described later.

### (1) Hot water resistance

A load of 0.4 N/mm was applied to one metal member of the assembly obtained in the above 3.3) so that the assembly was immersed in hot water at 95°C, and the other metal member was suspended. A time until the bonded site of the assembly was peeled off, and the assembly dropped was measured, and evaluated according to 4 levels below. The results are shown in Table 4.
A: The assembly did not drop even after a lapse of 500 hours or more.
B: The assembly dropped during 300 to 500 hours.
C: The assembly dropped during 100 to 300 hours.
D: The assembly dropped within 100 hours.

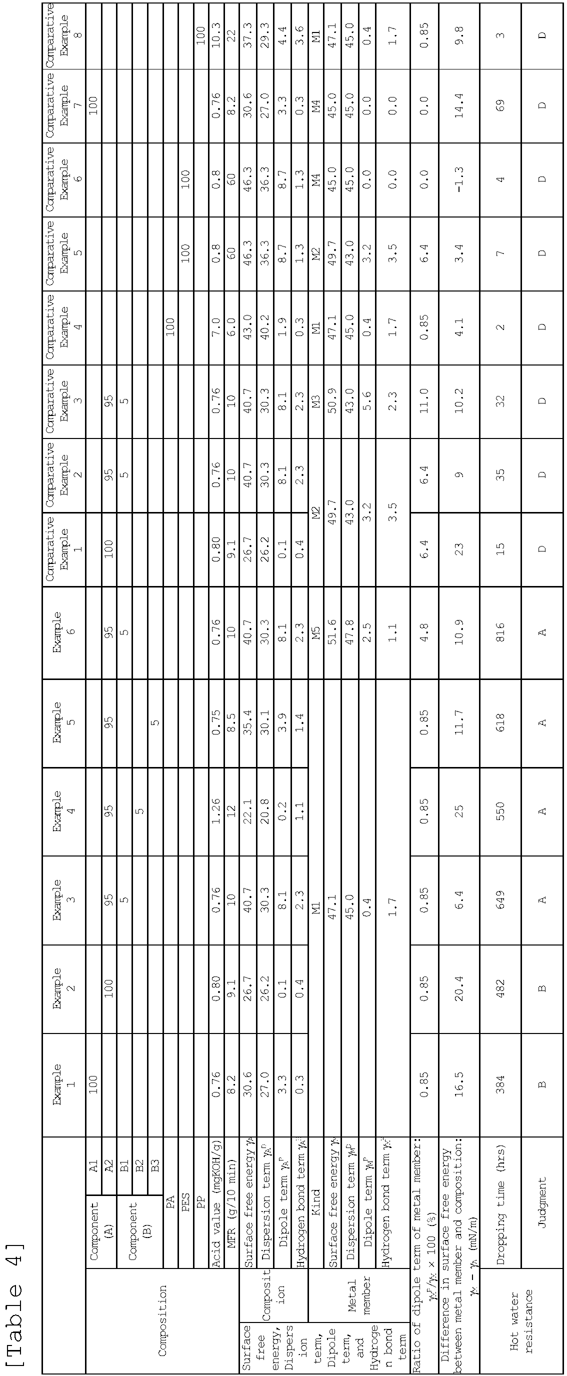

### 5) Evaluation results

As is apparent from the results of Examples 3 to 6, the adhesive composition of the present disclosure had excellent hot water resistance.

On the other hand, the adhesive compositions of Comparative Examples 1 to 3 contained the component (A), but the ratio of the dipole term of the metal member exceeded 5.0%, whereby the adhesive compositions had very poor hot water resistance. The adhesive compositions of Comparative Examples 4 to 6 did not contain the component (A), whereby the adhesive compositions had very poor hot water resistance regardless of the ratio of the dipole term of the metal member. The adhesive composition of Comparative Example 7 contained the component (A), but the ratio of the dipole term of the metal member was less than 0.01%, whereby the adhesive composition had poor hot water resistance. The adhesive composition of Comparative Example 8 contained the component (A), but the acid value of the component (A) exceeded 6.5 mgKOH/g, whereby the adhesive composition had poor hot water resistance.

### INDUSTRIAL APPLICABILITY

The present disclosure relates to an adhesive composition having an excellent adhesive force even in the presence of hot water in an assembly in which at least one of members is a low-polarity metal member, and can be used in various fields such as an electric field, an automobile field, and other industrial fields, particularly in the field of an on-vehicle battery such as a fuel cell.

## Claims

1. An adhesive composition for bonding a metal member,
the adhesive composition comprising a polyolefin (A) component having at least one group selected from the group consisting of an acidic group and an acid anhydride group and having an acid value, measured as set out in the description, of 0.01 mgKOH/g to 6.5 mgKOH/g,
wherein the metal member has a ratio of a dipole term, measured as set out in the description, in surface free energy, measured as set out in the description, of 0.01% to 5.0%, and
the adhesive composition further contains a styrene-based thermoplastic elastomer (B) component.

2. The adhesive composition according to claim 1, wherein the acidic group contains a carboxylic acid group, and the acid anhydride group contains a carboxylic acid anhydride group.

3. The adhesive composition according to claim 1 or 2, wherein
the polyolefin (A) component contains a propylene unit, and
a content of the propylene unit is 50% by mass or more with respect to the polyolefin (A) component.

4. The adhesive composition according to any one of claims 1 to 3, wherein a content ratio of the polyolefin (A) component is 80% by mass or more and less than 100% by mass, and a content ratio of the styrene-based thermoplastic elastomer (B) component is more than 0% by mass and 20% by mass or less, based on a total amount of the polyolefin (A) component and the styrene-based thermoplastic elastomer (B) component.

5. The adhesive composition according to any one of claims 1 to 4, wherein the adhesive composition has an acid value of 0.01 mgKOH/g to 3.0 mgKOH/g.

6. A method for bonding two or more members using an adhesive composition containing a polyolefin (A) component having at least one group selected from the group consisting of an acidic group and an acid anhydride group and having an acid value, measured as set out in the description, of 0.01 mgKOH/g to 6.5 mgKOH/g,
wherein at least one of the members is a metal member having a ratio of a dipole term, measured as set out in the description, in surface free energy, measured as set out in the description, of 0.01% to 5.0%, and
the adhesive composition further contains a styrene-based thermoplastic elastomer (B) component.

## Patentansprüche

1. Eine Haftzusammensetzung zum Verkleben eines Metallteils,
wobei die Haftzusammensetzung eine Polyolefinkomponente (A) umfasst, die mindestens eine Gruppe, ausgewählt aus der Gruppe bestehend aus einer Säuregruppe und einer Säureanhydridgruppe, aufweist und einen Säurewert, gemessen wie in der Beschreibung angegeben, von 0,01 mgKOH/g bis 6,5 mgKOH/g aufweist,
wobei das Metallteil einen Anteil eines Dipol-Terms, gemessen wie in der Beschreibung angegeben, in freier Oberflächenenergie, gemessen wie in der Beschreibung angegeben, von 0,01% bis 5,0% aufweist, und
die Haftzusammensetzung ferner eine thermoplastische Elastomerkomponente (B) auf Styrolbasis enthält.

2. Die Haftzusammensetzung nach Anspruch 1, wobei die Säuregruppe eine Carbonsäuregruppe enthält und die Säureanhydridgruppe eine Carbonsäureanhydridgruppe enthält.

3. Die Haftzusammensetzung nach Anspruch 1 oder 2, wobei
die Polyolefinkomponente (A) eine Propyleneinheit enthält und
ein Gehalt der Propyleneinheit 50 Massen-% oder mehr, bezogen auf die Polyolefinkomponente (A), beträgt.

4. Die Haftzusammensetzung nach einem der Ansprüche 1 bis 3, wobei ein Gehaltsanteil der Polyolefinkomponente (A) 80 Massen-% oder mehr und weniger als 100 Massen-% beträgt und ein Gehaltsanteil der thermoplastischen Elastomerkomponente (B) auf Styrolbasis mehr als 0 Massen-% und 20 Massen-% oder weniger beträgt, bezogen auf eine Gesamtmenge der Polyolefinkomponente (A) und der thermoplastischen Elastomerkomponente (B) auf Styrolbasis.

5. Die Haftzusammensetzung nach einem der Ansprüche 1 bis 4, wobei die Haftzusammensetzung einen Säurewert von 0,01 mgKOH/g bis 3,0 mgKOH/g aufweist.

6. Ein Verfahren zum Verkleben von zwei oder mehr Teilen unter Verwendung einer Haftzusammensetzung, die eine Polyolefinkomponente (A) enthält, die mindestens eine Gruppe, ausgewählt aus der Gruppe bestehend aus einer Säuregruppe und einer Säureanhydridgruppe, aufweist, und einen Säurewert, gemessen wie in der Beschreibung angegeben, von 0,01 mgKOH/g bis 6,5 mgKOH/g aufweist,
wobei mindestens eines der Teile ein Metallteil ist, das einen Anteil eines Dipol-Terms, gemessen wie in der Beschreibung angegeben, in freier Oberflächenenergie, gemessen wie in der Beschreibung angegeben, von 0,01% bis 5,0% aufweist, und
die Haftzusammensetzung ferner eine thermoplastische Elastomerkomponente (B) auf Styrolbasis enthält.

## Revendications

1. Composition adhésive pour coller un élément métallique,
la composition adhésive comprenant un composant polyoléfine (A) ayant au moins un groupe choisi dans le groupe constitué par un groupe acide et un groupe anhydride d'acide et ayant un indice d'acide, mesuré comme indiqué dans la description, de 0,01 mgKOH/g à 6,5 mgKOH/g,
dans laquelle l'élément métallique présente un rapport de terme dipolaire, mesuré comme indiqué dans la description, dans l'énergie libre de surface, mesurée comme indiqué dans la description, de 0,01 % à 5,0 %, et
la composition adhésive contient en outre un composant élastomère thermoplastique à base de styrène (B).

2. Composition adhésive selon la revendication 1, dans laquelle le groupe acide contient un groupe acide carboxylique, et le groupe anhydride d'acide contient un groupe anhydride d'acide carboxylique.

3. Composition adhésive selon la revendication 1 ou 2, dans laquelle
le composant polyoléfine (A) contient un motif propylène, et
la teneur en le motif propylène est de 50 % en masse ou plus par rapport au composant polyoléfine (A).

4. Composition adhésive selon l'une quelconque des revendications 1 à 3, dans laquelle la teneur en le composant polyoléfine (A) est de 80 % en masse ou plus et inférieure à 100 % en masse, et la teneur en le composant élastomère thermoplastique à base de styrène (B) est supérieure à 0 % en masse et de 20 % en masse ou moins, par rapport à la quantité totale du composant polyoléfine (A) et du composant élastomère thermoplastique à base de styrène (B).

5. Composition adhésive selon l'une quelconque des revendications 1 à 4, dans laquelle la composition adhésive a un indice d'acide de 0,01 mgKOH/g à 3,0 mgKOH/g.

6. Méthode pour coller deux éléments ou plus, utilisant une composition adhésive contenant un composant polyoléfine (A) ayant au moins un groupe choisi dans le groupe constitué par un groupe acide et un groupe anhydride d'acide et ayant un indice d'acide, mesuré comme indiqué dans la description, de 0,01 mgKOH/g à 6,5 mgKOH/g,
dans laquelle au moins l'un des éléments est un élément métallique présentant un rapport de terme dipolaire, mesuré comme indiqué dans la description, dans l'énergie libre de surface, mesurée comme indiqué dans la description, de 0,01 % à 5,0 %, et
la composition adhésive contient en outre un composant élastomère thermoplastique à base de styrène (B).
